Europäisches Patentamt

European Patent Office

Office européen des brevets

(11) Publication number : **0 496 485 A1**

# EUROPEAN PATENT APPLICATION

(21) Application number : **92300037.6**

(22) Date of filing : **03.01.92**

(51) Int. Cl.⁵ : **H05B 3/84**

(30) Priority : **19.01.91 GB 9101246**

(43) Date of publication of application :
**29.07.92 Bulletin 92/31**

(84) Designated Contracting States :
**DE ES FR GB IT SE**

(71) Applicant : **BRITAX (GECO) S.A.**
**88 Avenue de Fontainebleau, B.P. 20**
**F-77981 St. Fargeau-Ponthierry Cédex (FR)**

(72) Inventor : **Desvignes, Isabelle**
**71 rue du bon Puits**
**91080 Courcoronnes (FR)**

(74) Representative : **Hollinghurst, Antony**
**Britax Limited Patent Department**
**Chichester West Sussex PO19 2AQ (GB)**

(54) **Electrically heated vehicle mirror.**

(57)  An electrically heated vehicle mirror has a heating element comprising an elongate electrically insulated conductor (12) secured to an adhesive layer on a flexible substrate (10) so that adjacent lengths thereof are spaced apart from one another. The substrate (10) is secured to the back of the reflective element (20) by said adhesive layer between adjacent lengths of the conductor (12) so that the conductor (12) is sandwiched between the substrate (10) and the reflective element (20).

Fig.3.

This invention relates to an electrically heated vehicle mirror of the type having a heating element comprising an elongate electrically insulated conductor secured to a flexible substrate by adhesive so that adjacent lengths thereof are spaced apart from one another, the substrate being secured to the back of the reflective element of the mirror by adhesive.

An electrically heated rear view mirror of this type is disclosed in SE-A-8804561. The flexible substrate is double-sided adhesive tape and the electrically insulated conductor is an insulated wire which is wound as a flat spiral either with adjacent windings in close proximity to one another or with a filler wire between adjacent windings. The adhesive on the other side of the double-sided adhesive tape is used to secure the tape to the rear side of the reflective element of the mirror.

According to the present invention, in an electrically heated vehicle mirror of the type described above, the substrate is secured to the back of the reflective element by the adhesive thereon between adjacent lengths of the conductor, the conductor being sandwiched between the substrate and the reflective element.

In order to secure reliable adhesion, it is preferable for the proportion of the total surface area of the substrate which makes adhesive contact with the back of the reflective element to be at least thirty per cent of the total surface area.

The conductor may be arranged on the substrate in a zig-zag pattern with adjacent lengths thereof parallel to one another.

In a preferred form of the invention, the substrate is double-sided adhesive tape, the adhesive on the opposite side of the tape to the conductor and the reflective element being used to secure the reflective element to a mirror carrier.

An embodiment of the invention will now be described, by way of example, with reference to the accompanying drawing, in which:

Figure 1 is a plan view of an electric heater for use with a vehicle mirror in accordance with the invention;

Figure 2 is a cross-sectional view showing the heater illustrated in Figure 1 sandwiched between the reflective element and the mirror carrier of a rear view mirror in accordance with the invention; and

Figure 3 is a fragmentary cross-sectional view showing the left-hand part of Figure 2 on an enlarged scale.

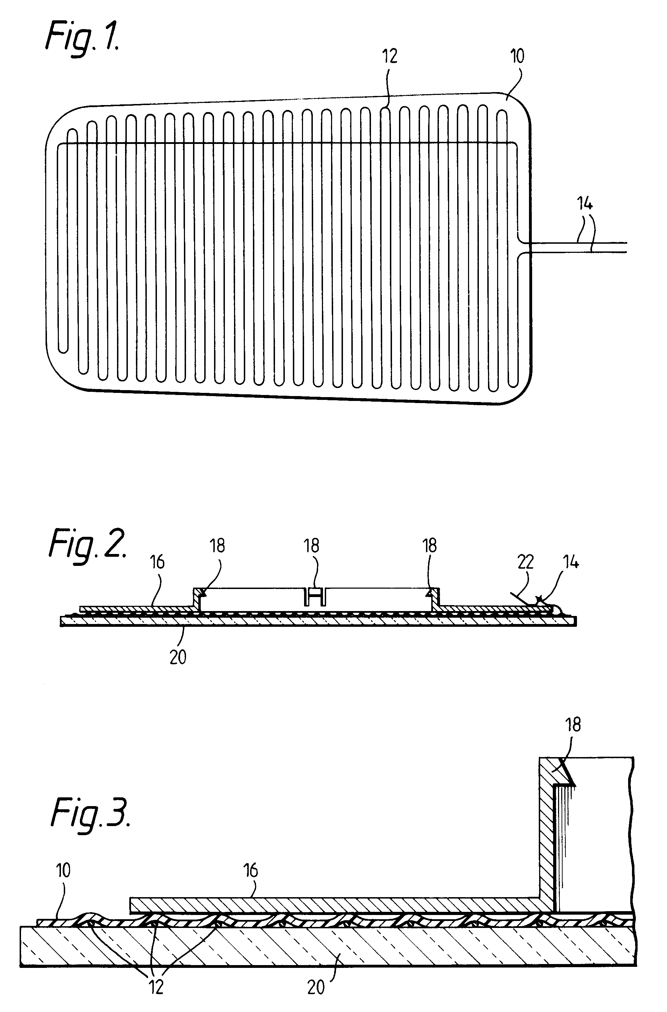

Referring first to Figure 1, a piece of double-sided adhesive tape 10 is cut to the same shape and size as the reflective element of a vehicle rear view mirror. An electric heater element, formed from copper wire with an insulating coating such as enamel, is positioned on the tape 10 in a zig-zag path with a adjacent elements parallel to one another and held in place by the adhesive of the tape 10. The ends 14 of the wire project from one edge of the adhesive tape.

Referring to Figures 2 and 3, a mirror carrier 16 for a vehicle rear view mirror has interlocking formations 18 on one surface arranged to engage with complementary formations (not shown) to secure the mirror carrier in a housing. This arrangement is well known and will not be described further.

The opposite surface of the mirror carrier 16 confronts the back surface of a reflective element 20. The double-sided adhesive tape 10 is sandwiched between the mirror carrier 16 and the reflective element 20 with the conductor 12 abutting against the reflective element 20. The adhesive on one side of the tape 10 secures the tape 10 to the reflective element 20 while the adhesive on the other side secures the assembly comprising the heater and the reflective element 20 to the mirror carrier 16.

The ends 14 of the conductor 12 are connected to respective terminal tags 22 on the opposite side of the mirror carrier 16, as shown in Figure 2.

## Claims

1. An electrically heated vehicle mirror having a heating element comprising an elongate electrically insulated conductor (12) secured to an adhesive layer on a flexible substrate (10) so that adjacent lengths thereof are spaced apart from one another, the substrate (10) being secured to the back of the reflective element (20) of the mirror by adhesive, characterised in that the substrate (10) is secured to the back of the reflective element (20) by said adhesive layer between adjacent lengths of the conductor (12) so that the conductor (12) is sandwiched between the substrate (10) and the reflective element (20).

2. A mirror according to claim 1, wherein the proportion of the total surface area of the adhesive layer which makes adhesive contact with back of the reflective element (20) is at least thirty per cent of the total surface area thereof.

3. A mirror according to claim 1 or 2, wherein the conductor (12) is arranged on the substrate (10) in a zig-zag pattern with adjacent lengths thereof parallel to one another.

4. A mirror according to claim 1, 2 or 3, wherein the substrate is double-sided adhesive tape (10), the adhesive on the opposite side of the tape (10) to the conductor (12) and the reflective element (20) being used to secure the reflective element (20) to a mirror carrier (16).

Fig.1.

Fig.2.

Fig.3.

European Patent
Office

**EUROPEAN SEARCH REPORT**

Application Number

EP    92 30 0037

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2 950 321 (KABEL UND METALLWERKE GUTEHOFFNUNGSHÜTTE AG)<br>* page 4, line 28 - page 5, line 3 *<br>* page 7, paragraph 2; figures 1,2 *<br>--- | 1-4 | H05B3/84 |
| A | FR-A-2 618 396 (BOYELDIEU ANDRE)<br>* page 2, line 34 - page 3, line 20; figures 1,2 *<br>--- | 1-4 | |
| A | FR-A-2 516 459 (BRITAX (GECO) SA.)<br>* page 3, line 26 - page 4, line 4; figure 2 *<br>--- | 1-3 | |
| A | GB-A-1 545 770 (SMITHS INDUSTRIES LIMITED)<br>* page 2, line 48 - line 104; figures 1,2,5 *<br>--- | 1,3 | |
| A | DE-A-3 202 344 (KG. WÄRME & ELEKTROTECHNIK B. RUTHENBERG GMBH)<br>--- | | |
| A | DE-A-3 311 803 (STETTNER & CO) | | |
| | ----- | | **TECHNICAL FIELDS SEARCHED (Int. Cl.5 )**<br><br>H05B<br>B60R |

The present search report has been drawn up for all claims

| Place of search | Date of completion of the search | Examiner |
|---|---|---|
| THE HAGUE | 01 APRIL 1992 | RAUSCH R.G. |

EPO FORM 1503 03.82 (P0401)